# EUROPÄISCHE PATENTSCHRIFT

(11) **EP 2 884 125 B1**
(45) Veröffentlichungstag und Bekanntmachung des Hinweises auf die Patenterteilung: **01.05.2019**
(21) Anmeldenummer: 14187050.1
(22) Anmeldetag: 30.09.2014
(51) Int. Cl.: F16C 32/04, F04D 19/04, F16C 19/06

(54) **ROTIERENDES SYSTEM**
ROTATING SYSTEM
SYSTÈME ROTATIF

(30) Priorität: 13.12.2013 DE 102013113986
(43) Veröffentlichungstag der Anmeldung: 17.06.2015
(73) Patentinhaber: PFEIFFER VACUUM GMBH, 35614 Asslar (DE)
(72) Erfinder: Wirth, Adrian, 35582 Wetzlar (DE); Mekota, Mirko, 35630 Ehringshausen (DE)
(74) Vertreter: Manitz Finsterwald Patent- und Rechtsanwaltspartnerschaft mbB

(56) Entgegenhaltungen:
- DE-A1- 2 825 551
- DE-A1- 3 239 328
- DE-A1- 10 338 167
- DE-A1-102007 036 692
- DE-A1-102008 060 569
- US-A- 5 394 044

## Beschreibung

Die vorliegende Erfindung betrifft ein rotierendes System, insbesondere eine Vakuumpumpe, mit einem Stator, einem Rotor und einem Permanentmagnetlager zur drehbaren Lagerung des Rotors.

Rotierende Systeme werden in unterschiedlichen Bereichen der Technik eingesetzt. Beispielsweise sind als Vakuumpumpen ausgebildete rotierende Systeme bekannt, die dazu dienen, ein für einen jeweiligen Prozess notwendiges Vakuum zu schaffen. Eine solche Vakuumpumpe ist z.B. eine Turbomolekularpumpe, die zur Erzeugung eines hochreinen Vakuums geeignet ist und einen Rotor aufweist, der mit einer sehr hohen Rotationsfrequenz gegenüber einem Stator der Vakuumpumpe rotiert.

Um bei einer Vakuumpumpe eine hohe Pumpleistung und eine hohe Reinheit des Vakuums zu erreichen, ist eine Lagerung des Rotors erforderlich, welche eine möglichst geringe Reibung aufweist und keine Verschmutzung des Vakuums hervorruft, z.B. durch bei der Lagerung eingesetzte Schmierstoffe. Um diese Erfordernisse zu erfüllen, ist es bekannt, den Rotor der Vakuumpumpe an seinem der Hochvakuumseite der Pumpe zugewandten Ende mit einem Permanentmagnetlager zu lagern, welches aufgrund seiner berührungsfreien und schmiermittelfreien Ausgestaltung weder zu Reibungsverlusten noch zu einer Verschmutzung des Vakuums durch Schmierstoffe führt. An dem der Hochvakuumseite abgewandten Ende kann der Rotor durch ein herkömmliches geschmiertes Wälzlager gelagert sein, welches den Rotor sowohl in radialer als auch in axialer Richtung festlegt.

Problematisch bei bekannten Vakuumpumpen sind die bei dem Betrieb der Vakuumpumpe auftretenden Vibrationen, welche die Betriebssicherheit der Vakuumpumpe und die Verwendbarkeit der Vakuumpumpe in vibrationsempfindlichen Prozessen beeinträchtigen.

Insbesondere beim Hochlaufen und Herunterfahren der Vakuumpumpe treten starke Schwingungen des Rotors auf, welche sich so verstärken können, dass ein Not- bzw. Fanglager in Eingriff gelangt, welches einen radialen Anschlag für den Rotor bildet, um im Fall von Erschütterungen der Vakuumpumpe eine gegenseitige Berührung des rotorseitigen Teils und des statorseitigen Teils des Permanentmagnetlagers zu verhindern.

Auch während des Betriebs der Vakuumpumpe bei Nenndrehzahl treten in der Vakuumpumpe Vibrationen auf, welche über die mechanische Verbindung zwischen dem Einlassflansch der Vakuumpumpe und einem daran angeschlossenen Rezipienten auf den Rezipienten und eine damit gegebenenfalls verbundene Messeinrichtung übertragen werden, so dass die Genauigkeit einer mit der Messeinrichtung durchgeführten Messung beeinträchtigt wird und die Vakuumpumpe nur bedingt für hochpräzise Messungen unter Vakuumbedingungen geeignet ist.

Die Schwingungen werden zum Beispiel durch magnetische oder geometrische Rotationsasymmetrien wie zum Beispiel eine Unwucht des Rotors hervorgerufen, welche ohne ausreichende Dämpfung zu einer hohen Schwingungsamplitude führen, insbesondere beim Hochlaufen und Herunterfahren der Vakuumpumpe. Asymmetrien, welche zu Schwingungen führen, können auch im Laufe der Zeit entstehen, zum Beispiel infolge von Ablagerungen oder Abplatzungen an dem Rotor der Vakuumpumpe.

Um derartige Schwingungen zu vermeiden, kann ein Rotor mit einer sehr hohen Wuchtgüte verwendet werden oder der magnetische bzw. geometrische Fehler des Permanentmagnetlagers kann durch Einhaltung sehr enger Toleranzen der Komponenten des Permanentmagnetlagers gering gehalten werden. Ferner ist es möglich, im Bereich des Permanentmagnetlagers eine Dämpfungsvorrichtung vorzusehen, um auftretende Schwingungen möglichst gut zu dämpfen. Diese Maßnahmen sind aber mit einem sehr hohen Aufwand verbunden und führen zu einer unzureichenden Verringerung vorhandener Schwingungen und Vibrationen. Auch andere rotierende Systeme weisen die vorstehend in Bezug auf Vakuumpumpen beschriebenen Probleme auf.

Aus der DE 10 2007 036 692 A1 sind ein rotierendes System gemäß dem Oberbegriff des Anspruchs 1 und ein Verfahren gemäß dem Oberbegriff des Anspruchs 9 bekannt.

Aufgabe der Erfindung ist es daher, ein rotierendes System und insbesondere eine Vakuumpumpe, zu schaffen, bei dessen Betrieb Vibrationen weitestgehend vermieden werden und das daher eine erhöhte Betriebssicherheit aufweist und insbesondere auch für hochpräzise Messungen verwendbar ist. Aufgabe der Erfindung ist ferner die Angabe eines Verfahrens zum Betreiben eines rotierenden Systems und insbesondere einer Vakuumpumpe, mit dem Vibrationen des rotierenden Systems reduziert werden und das die Verwendung des rotierenden Systems für hochpräzise Messungen erlaubt.

Die Aufgabe wird durch ein rotierendes System mit den Merkmalen des Anspruchs 1 gelöst.

Das rotierende System ist insbesondere eine Vakuumpumpe. Das rotierende System umfasst einen Stator, einen Rotor und ein Permanentmagnetlager zur drehbaren Lagerung des Rotors. Das rotierende System umfasst ferner eine Stellvorrichtung zur Verstellung der Resonanzfrequenz des Permanentmagnetlagers.

Die Erfindung beruht auf der Beobachtung, dass der Rotor und der Stator infolge der magnetischen Kopplung durch das Permanentmagnetlager ein schwingungsfähiges System bilden, dessen schwingende Größe die radiale Auslenkung des Rotors gegenüber dem Stator im Bereich des Permanentmagnetlagers ist. Die magnetische Kopplung des Rotors und des Stators durch das Permanentmagnetlager bestimmt dabei die Resonanzfrequenz des schwingungsfähigen Systems und des die schwingungsfähige Kopplung bewirkenden Permanentmagnetlagers.

Es wurde erkannt, dass die in dem rotierenden System während des Betriebs vorhandenen Vibrationen zu einem entscheidenden Anteil durch die Anregung des schwingungsfähigen Systems durch den rotierenden Rotor erzeugt werden und dass diese Schwingungsanregung besonders stark ist, wenn sich die Rotationsfrequenz des Rotors in der Nähe der Resonanzfrequenz des Permanentmagnetlagers befindet. Das Ausmaß der bei dem Betrieb des rotierenden Systems auftretenden Vibrationen kann deshalb durch eine von der aktuellen Rotationsfrequenz abhängige Anpassung der Resonanzfrequenz des Permanentmagnetlagers durch die erfindungsgemäß vorgesehene Stellvorrichtung wirksam und zuverlässig reduziert werden. Das rotierende System kann durch die Verstellung der Resonanzfrequenz gewissermaßen entstimmt werden, so dass bei der aktuellen Rotationsfrequenz jeweils keine oder nur eine stark gedämpfte Schwingungsanregung erfolgt und das rotierende System ein geringes Vibrationsniveau und eine hohe Betriebssicherheit erreicht.

Die Stellvorrichtung zur Verstellung der Resonanzfrequenz des Permanentmagnetlagers kann mit geringem Aufwand realisiert werden, so dass das rotierende System mit dem niedrigen Vibrationsniveau und der hohen Betriebssicherheit gleichzeitig kostengünstig herstellbar ist.

Erfindungsgemäß ist eine Steuereinheit zur Ansteuerung der Stellvorrichtung vorgesehen. Die Steuereinheit und die Stellvorrichtung sind dazu eingerichtet, die Resonanzfrequenz während eines Hochlaufs des rotierenden Systems sprunghaft zu reduzieren. Durch die Reduzierung der Resonanzfrequenz erfolgt ein Durchgang der Rotationsfrequenz durch die Resonanzfrequenz, das heißt, dass die Resonanzfrequenz von einem Wert oberhalb der jeweils aktuellen Rotationsfrequenz auf einen Wert unterhalb der jeweils aktuellen Rotationsfrequenz reduziert wird. Das System wird durch die Reduzierung der Resonanzfrequenz also von einem unterkritischen Schwingungszustand, in dem sich die aktuelle Rotationsfrequenz unterhalb der Resonanzfrequenz befindet, in einen überkritischen Schwingungszustand umgeschaltet, in dem sich die Rotationsfrequenz oberhalb der aktuellen Resonanzfrequenz befindet. Da die Resonanzfrequenz sprunghaft reduziert wird, liegt allenfalls während eines sehr kurzen Zeitraums eine Übereinstimmung zwischen Rotationsfrequenz und Resonanzfrequenz vor, und eine übermäßige Schwingungsanregung während des Hochlaufs wird vermieden. Dadurch wird ein deutlich niedrigeres Schwingungsniveau erreicht, als bei einem durch Erhöhen der Rotationsfrequenz bei gleichbleibender Resonanzfrequenz bewirkten Durchgang auftreten würde.

Vorteilhafte Ausführungsformen der Erfindung sind in den Unteransprüchen, der Beschreibung und den Figuren beschrieben.

Gemäß einer vorteilhaften Ausführungsform ist die Stellvorrichtung dazu ausgebildet, zur Verstellung der Resonanzfrequenz die radiale Steifigkeit des Permanentmagnetlagers zu verstellen. Die radiale Steifigkeit des Permanentmagnetlagers stellt gewissermaßen die Federkonstante des schwingungsfähigen Systems dar und bestimmt daher unmittelbar die Resonanzfrequenz des Permanentmagnetlagers. Eine geringe radiale Steifigkeit, d.h. eine weiche Einstellung, entspricht dabei einer niedrigen Resonanzfrequenz des Permanentmagnetlagers und eine hohe radiale Steifigkeit, d.h. eine harte Einstellung, entspricht einer hohen Resonanzfrequenz des Permanentmagnetlagers. Die radiale Steifigkeit des Permanentmagnetlagers lässt sich, wie nachfolgend im Einzelnen erläutert, mit einfachen Mitteln wirksam und zuverlässig verstellen.

Bevorzugt ist die Resonanzfrequenz durch die Stellvorrichtung auf wenigstens zwei verschiedene Werte einstellbar. Eine Einstellbarkeit auf zwei oder mehr verschiedene Werte ist mit einfachen Mitteln realisierbar und erlaubt bereits eine weitgehende Reduzierung der Vibrationen des rotierenden Systems während des Betriebs. Die wenigstens zwei verschiedenen Werte können einen Abstand von wenigstens 5 Hz und bevorzugt wenigstens 10 Hz oder wenigstens 13 Hz aufweisen. Ein höherer Wert der Resonanzfrequenz kann, bezogen auf einen niedrigeren Wert der Resonanzfrequenz, um wenigstens 10 %, um wenigstens 20 % oder um wenigstens 25 % höher sein als der niedrigere Wert. Die zwei oder mehr verschiedenen Werte der Resonanzfrequenz können jeweils einem von mehreren verschiedenen einstellbaren Werten der radialen Steifigkeit entsprechen. Ein höherer Wert der radialen Steifigkeit kann um wenigstens 5 N/mm, um wenigstens 10 oder um wenigstens 20 N/mm und/oder, bezogen auf einen niedrigeren Wert der radialen Steifigkeit, um wenigstens 10 %, um wenigstens 18 % oder um wenigstens 20 % höher sein als der niedrigere Wert.

Gemäß einer vorteilhaften Ausführungsform ist die Stellvorrichtung dazu ausgebildet, zur Verstellung der Resonanzfrequenz die geometrische Form des Permanentmagnetlagers zu verändern. Über die geometrische Form lassen sich unmittelbar das von dem Permanentmagnetlager erzeugte Magnetfeld und die erzeugten Lagerkräfte und damit die radiale Steifigkeit des Lagers verstellen. Auf diese Weise lässt sich daher unmittelbar die Resonanzfrequenz beeinflussen.

Eine vorteilhafte Ausführungsform sieht vor, dass die Stellvorrichtung dazu ausgebildet ist, zur Verstellung der Resonanzfrequenz den axialen Versatz zwischen einem rotorseitigen Teil und einem statorseitigen Teil des Permanentmagnetlagers zu verstellen. Da die radiale Steifigkeit des Permanentmagnetlagers stark von diesem axialen Versatz abhängt, wird dadurch eine wirksame Möglichkeit zur gezielten Verstellung der radialen Steifigkeit und damit der Resonanzfrequenz des Permanentmagnetlagers geschaffen.

Die Verstellbarkeit des axialen Versatzes lässt sich mit einfachen Mitteln realisieren. Die Stellvorrichtung kann zum Beispiel einen Antrieb aufweisen, der zur Bewegung des rotorseitigen oder statorseitigen Teils des Permanentmagnetlagers gegenüber dem jeweils anderen Teil in axialer Richtung ausgebildet ist. Bei dem Antrieb kann es sich um einen piezobasierten bzw. piezoelektrischen, elektrischen, elektromagnetischen, pneumatischen, hydraulischen, mechanischen, fliehkraftgesteuerten oder anderen geeigneten Antrieb handeln. Der insbesondere piezobasierte Antrieb kann eine aktive Verschiebungsmessung aufweisen.

Um den verstellbaren axialen Versatz zwischen dem rotorseitigen und dem statorseitigen Teil des Magnetlagers zu gewährleisten, kann der rotorseitige und/oder statorseitige Teil des Magnetlagers jeweils gegenüber dem Rotor bzw. Stator in axialer Richtung axial verstellbar sein. Ebenso kann der Rotor mitsamt dem an dem Rotor angebrachten rotorseitigen Lagerteil gegenüber dem Stator in axialer Richtung verstellbar sein. Um eine solche axiale Verstellung des Rotors gegenüber dem Stator zu ermöglichen, kann ein zur axialen Festlegung des Rotors vorgesehenes Axiallager des rotierenden Systems axial verstellbar mit dem Rotor und/oder dem Stator verbunden sein und/oder das Axiallager kann so ausgebildet sein, dass der rotorseitige Teil und der statorseitige Teil des Axiallagers in verschiedenen axialen Stellungen zueinander fixierbar sind oder ein axiales Lagerspiel ausreichender Größe vorhanden ist.

Darüber hinaus bestehen weitere Möglichkeiten, eine Verstellbarkeit der Resonanzfrequenz bzw. der radialen Steifigkeit des Permanentmagnetlagers zu gewährleisten, welche alternativ oder zusätzlich zu der Verstellbarkeit des axialen Versatzes vorgesehen sein können.

Beispielsweise kann die Stellvorrichtung dazu ausgebildet sein, zur Verstellung der Resonanzfrequenz die Weite eines zwischen dem rotorseitigen Teil und dem statorseitigen Teil des Permanentmagnetlagers ausgebildeten, insbesondere radialen, Lagerspalts zu verstellen. Alternativ oder zusätzlich kann die Stellvorrichtung dazu ausgebildet sein, zur Verstellung der Resonanzfrequenz die permanente Magnetisierung zumindest eines Permanentmagneten des Permanentmagnetlagers zu verstellen. Alternativ oder zusätzlich kann das Permanentmagnetlager wenigstens einen Elektromagneten umfassen und die Stellvorrichtung kann dazu ausgebildet sein, zur Verstellung der Resonanzfrequenz den durch den Elektromagneten fließenden elektrischen Strom zu verstellen. Auch hierdurch lässt sich die Resonanzfrequenz bzw. die radiale Steifigkeit des Permanentmagnetlagers wirksam und gezielt verstellen.

Gemäß einer vorteilhaften Ausführungsform ist die Steuereinheit, welche als elektronische Steuereinheit ausgebildet sein kann, dazu eingerichtet, die Verstellung der Resonanzfrequenz durch die Stellvorrichtung zu steuern. Beispielsweise kann die Stellvorrichtung von der Steuereinheit so ansteuerbar sein, dass ein bestimmter vorgegebener Wert der Resonanzfrequenz einstellbar ist.

Bevorzugt ist die Steuereinheit dazu eingerichtet, die Verstellung der Resonanzfrequenz durch die Stellvorrichtung so zu steuern, dass der Betrieb des rotierenden Systems optimiert wird und insbesondere bei dem Betrieb des rotierenden Systems auftretende Vibrationen reduziert werden.

Gemäß einer Ausführungsform ist die Steuereinheit dazu eingerichtet, die Stellvorrichtung so anzusteuern, dass die Resonanzfrequenz abhängig von der aktuellen Rotationsfrequenz des rotierenden Systems verstellt wird, und zwar insbesondere derart, dass ein Übereinstimmen der Resonanzfrequenz mit der aktuellen Rotationsfrequenz vermieden wird. Insbesondere kann die Steuereinheit die Resonanzfrequenz so einstellen, dass diese zu keinem Zeitpunkt oder allenfalls vorübergehend, z.B. während eines Übergangs der Resonanzfrequenz von einem Wert zu einem anderen Wert, mit der aktuellen Rotationsfrequenz übereinstimmt. Das rotierende System befindet sich in diesem Fall zu jedem oder zu fast jedem Zeitpunkt entweder in einem unterkritischen Schwingungsbereich, in dem die Resonanzfrequenz unterhalb der Resonanzfrequenz liegt, oder in einem überkritischen Schwingungsbereich, in dem die Rotationsfrequenz oberhalb der Resonanzfrequenz liegt. Durch diese ständige Entstimmung des rotierenden Systems werden Schwingungen gedämpft und Vibrationen weitgehend vermieden.

Um die Rotationsfrequenz und die Resonanzfrequenz des Systems aufeinander abzustimmen, kann die Steuereinheit dazu ausgebildet sein, sowohl die Rotationsfrequenz als auch die Resonanzfrequenz des Systems zu steuern.

Vorzugsweise ist die Steuereinheit dazu eingerichtet, den Betrieb des rotierenden Systems während des Hochlaufs und/oder während des Herunterfahrens zu optimieren, um die andernfalls in diesen Betriebszuständen auftretenden Schwingungsanregungen zu vermeiden, welche besonders kritisch sind.

Gemäß einer Ausführungsform sind die Steuereinheit und die Stellvorrichtung dazu eingerichtet, die Resonanzfrequenz auch während eines Herunterlaufens/Herunterfahrens des rotierenden Systems zu reduzieren.

Gemäß einer vorteilhaften Ausführungsform werden die Rotationsfrequenz und die Resonanzfrequenz so eingestellt, dass die Rotationsfrequenz während der Reduzierung der Resonanzfrequenz im Wesentlichen konstant ist. Der im Wesentlichen konstante Wert der Rotationsfrequenz liegt vorzugsweise zumindest annähernd in der Mitte eines hohen und eines niedrigen Werts, zwischen denen die Resonanzfrequenz im Zuge ihrer Reduzierung umgestellt wird, und/oder der im Wesentlichen konstante Wert der Rotationsfrequenz kann zu der hohen und zu der niedrigeren Resonanzfrequenz jeweils einen Abstand von mindestens 3, 5, 10 oder bevorzugt 15 Hz aufweisen.

Gemäß einer Ausführungsform sind die Steuereinheit und die Stellvorrichtung dazu eingerichtet, nach dem Durchgang der Rotationsfrequenz durch die Resonanzfrequenz die Rotationsfrequenz zu erhöhen. Dies ist gefahrlos möglich, da sich das rotierende System infolge des bereits erfolgten Durchgangs der Rotationsfrequenz durch die Resonanzfrequenz bereits in einem überkritischen Schwingungszustand befindet.

Die Resonanzfrequenz kann nach dem erfolgten Durchgang der Rotationsfrequenz durch die Resonanzfrequenz wieder erhöht werden und das Permanentmagnetlager dadurch hart-geschaltet, d.h. auf eine höhere radiale Steifigkeit verstellt werden. Die Resonanzfrequenz bleibt dabei vorzugsweise zu jedem Zeitpunkt unterhalb der aktuellen Rotationsfrequenz, welche - wie vorstehend beschrieben - nach dem Durchgang vorzugsweise ebenfalls erhöht wird. Die Hart-Schaltung des Permanentmagnetlagers nach dem Durchgang hat den Vorteil, dass die durch das Magnetlager erzeugten Axialkräfte reduziert werden, welche von einem ggf. vorhandenen zusätzlichen Axiallager, z.B. Wälzlager, aufgefangen werden müssen. Außerdem wird durch die höhere radiale Steifigkeit eine ausreichende Erschütterungsfestigkeit des rotierenden Systems sichergestellt.

Nachfolgend wird ein beispielhafter Hochlaufvorgang des rotierenden Systems beschrieben, der von der Steuereinheit gesteuert werden kann:
Die Verstellvorrichtung ist dazu ausgebildet, die Resonanzfrequenz zumindest zwischen einem hohen Wert und einem niedrigen Wert zu verstellen, wobei die Resonanzfrequenz zunächst auf den hohen Wert eingestellt ist.

Die Rotationsfrequenz des Rotors wird dann bei hoher Resonanzfrequenz auf einen Wert erhöht, welcher unterhalb des hohen Werts der Resonanzfrequenz und oberhalb des niedrigen Werts der Resonanzfrequenz liegt. Auf diesem Wert wird die Rotationsfrequenz vorzugsweise langfristig konstant gehalten. Das System befindet sich folglich im unterkritischen Schwingungsbereich. Die Resonanzfrequenz wird bei gleichbleibender Rotationsfrequenz von dem hohen Wert auf den niedrigen Wert verstellt, so dass sich das System daraufhin im überkritischen Schwingungsbereich befindet. Die Rotationsfrequenz des Rotors wird daraufhin weiter erhöht und auf einen Wert oberhalb des hohen Werts der Resonanzfrequenz, z.B. auf Nenndrehzahl, gebracht. Anschließend wird die Resonanzfrequenz wieder auf den hohen Wert erhöht.

Beim Herunterfahren des rotierenden Systems wird der vorstehend in Bezug auf das Hochlaufen beschriebene Vorrang vorzugsweise umgekehrt durchgeführt. Zunächst wird die Rotationsfrequenz von einem aktuellen hohen Wert, z.B. von Nenndrehzahl, reduziert. Bevor die Rotationsfrequenz von oben her den hohen Wert der Resonanzfrequenz erreicht, wird die Resonanzfrequenz vorzugsweise auf den niedrigeren Wert umgestellt. Die Rotationsfrequenz wird auf einen Wert gebracht, der unterhalb der oberen Resonanzfrequenz und oberhalb der aktuell eingestellten unteren Resonanzfrequenz liegt. Sodann wird die Resonanzfrequenz, vorzugsweise sprunghaft, auf den höheren Wert erhöht, so dass das rotierende System bei bevorzugt konstanter Rotationsfrequenz von dem überkritischen in den unterkritischen Schwingungsbereich gebracht wird. Anschließend wird die Rotationsfrequenz weiter verringert, bis der Rotor steht.

Eine weitere vorteilhafte Ausführungsform sieht vor, dass die Resonanzfrequenz abhängig von einem Betriebszustand einer mit dem rotierenden System, insbesondere vakuumtechnisch, verbundenen Anlage verstellbar und insbesondere reduzierbar ist. Das rotierende System kann eine Vakuumpumpe sein und so mit der Anlage verbunden sein, dass eine Vakuumkammer der Anlage durch die Vakuumpumpe evakuierbar ist. Die Anlage kann eine Messeinrichtung zur Durchführung eines insbesondere bei Vakuumbedingungen durchzuführenden Messverfahrens umfassen und die Resonanzfrequenz kann für die Durchführung der Messung reduzierbar sein. Die Anlage kann als bildgebende Einrichtung wie z.B. als Mikroskop und insbesondere als Elektronenmikroskop ausgebildet sein und die Resonanzfrequenz kann für die Durchführung der der Bildgebung zugrunde liegenden Messungen reduzierbar sein.

Die Reduzierung der Resonanzfrequenz wird vorzugsweise durch eine Verringerung der radialen Steifigkeit, d.h. durch eine Weich-Schaltung, des Magnetlagers bewirkt. Durch die Weich-Schaltung des Permanentmagnetlagers für die Messung wird die Übertragung von Schwingungen des Rotors auf den Stator des rotierenden Systems und auf die mit dem Stator verbundene Anlage während der Messung erheblich reduziert, so dass während der Messung ein deutlich geringeres Vibrationsniveau in der Anlage erreicht wird. Durch die gezielte Verringerung des Vibrationsniveaus für die Dauer der Messung wird die Genauigkeit der Messung bzw. einer darauf basierenden Bildgebung erheblich erhöht.

Das rotierende System kann einen Steuereingang zum Empfangen eines Steuersignals umfassen, mit dem das rotierende System zur Verstellung der Resonanzfrequenz, insbesondere abhängig von dem Betriebszustand der vorstehend beschriebenen, mit dem rotierenden System verbundenen Anlage, ansteuerbar ist. Die Erfindung betrifft auch die Anordnung, die das rotierende System und die damit verbundene Anlage umfasst, wobei das rotierende System und die Anlage so miteinander gekoppelt sind, dass die Resonanzfrequenz abhängig von dem Betriebszustand der Anlage verstellbar ist.

Bei dem Permanentmagnetlager handelt es sich vorzugsweise um ein Radiallager. Das Permanentmagnetlager umfasst vorzugsweise einen rotorseitigen Teil und einen statorseitigen Teil, die jeweils wenigstens einen Permanentmagneten aufweisen, wobei die magnetische Wechselwirkung der Permanentmagneten die Lagerwirkung bereitstellt. Vorzugsweise umfassen die zwei Lagerteile jeweils einen Ringstapel mit mehreren permanentmagnetischen Ringen, die magnetisch miteinander gekoppelt sind. Die Ringstapel sind vorzugsweise koaxial zu der Rotationsachse des rotierenden Systems orientiert. Die Ringstapel können ineinander angeordnet sein, wobei zwischen den Ringstapeln vorzugsweise ein radialer Lagerspalt ausgebildet ist.

Bevorzugt ist das Permanentmagnetlager repulsiv, d.h. die permanentmagnetischen Ringe sind so polarisiert, dass sich einander in radialer Richtung gegenüberliegende Magnetringe abstoßen. Die Magnetringe können in axialer Richtung polarisiert sein. Dabei können in axialer Richtung aufeinanderfolgende Magnetringe desselben Stapels jeweils voneinander verschiedene und insbesondere in axialer Richtung zueinander entgegengesetzte Polarisierungen aufweisen. Dadurch wird eine besonders gute radiale Lagerwirkung erreicht. Außerdem lässt sich bei dieser Ausgestaltung die radiale Steifigkeit und damit die Resonanzfrequenz besonders stark und wirksam dadurch verändern, dass der axiale Versatz zwischen den beiden Lagerteilen verändert wird.

Die maximale radiale Steifigkeit ist vorzugsweise in einer Neutralposition der beiden Lagerteile vorhanden, in der kein axialer Versatz der Lagerteile vorhanden ist. In dieser Position können einander abstoßende Magnetringe beider Stapel in radialer Richtung genau gegenüberliegend angeordnet sein, so dass sich die einander abstoßenden Magnetringe in radialer Richtung betrachtet zumindest annähernd vollständig überlappen. Ein axialer Versatz bedeutet vorzugsweise, dass die Magnetringe in ihren Randbereichen aus der radialen Überlappung mit den in radialer Richtung jeweils gegenüberliegenden Magnetringen herausbewegt sind, so dass die radiale Repulsion und damit die radiale Steifigkeit und die Resonanzfrequenz des Magnetlagers verringert sind.

Wie vorstehend beschrieben, kann die Stellvorrichtung dazu ausgebildet sein, den axialen Versatz zwischen dem rotorseitigen Teil und dem statorseitigen Teil des Permanentmagnetlagers zu verstellen. Der erreichbare axiale Verstellweg kann zumindest bis zu dem 0,25-fachen der in axialer Richtung gemessenen Dicke eines bzw. jedes Rings eines Lagerteils betragen.

Zusätzlich zu dem Permanentmagnetlager kann ein, insbesondere geschmiertes, Wälzlager zur Lagerung des Rotors vorhanden sein. Das Wälzlager ist vorzugsweise zur radialen und axialen Festlegung des Rotors ausgebildet. Das Permanentmagnetlager kann hingegen als reines Radiallager ausgebildet sein.

Vorzugsweise weist das rotierende System ein Fanglager auf, welches eine radiale Auslenkung des Rotors gegenüber seiner Ruheposition im Bereich des Permanentmagnetlagers begrenzt und bevorzugt als radialer Anschlag für das Permanentmagnetlager dient. Das Fanglager kann in axialer Richtung auf der Höhe des Permanentmagnetlagers und insbesondere innerhalb des Permanentmagnetlagers angeordnet sein. Das Fanglager kann als, bevorzugt ungeschmiertes, Wälzlager ausgebildet sein, welches mit dem Rotor und/oder dem Stator einen radialen Spalt bildet, so dass das Fanglager im normalen Betrieb außer Eingriff ist und erst bei Erreichen bzw. Überschreiten einer maximal zulässigen radialen Auslenkung des Rotors in Eingriff gelangt.

Bei dem rotierenden System handelt es sich bevorzugt um eine Vakuumpumpe, insbesondere um eine Turbomolekularpumpe. Der Rotor kann mehrere in axialer Richtung aufeinanderfolgende turbomolekulare Rotorscheiben aufweisen und der Stator kann mehrere in axialer Richtung aufeinanderfolgende und in axialer Richtung zwischen den Rotorscheiben angeordnete turbomolekulare Statorscheiben umfassen. Bei dem rotierenden System handelt es sich bevorzugt um ein schnell drehendes System, dessen Rotor mit einer Rotationsfrequenz von bis zu mehreren 1000 bis mehreren 10000 Umdrehungen pro Minute drehend antreibbar ist.

Weiterer Gegenstand der Erfindung ist ein Verfahren mit den Merkmalen des Anspruchs 9.

Das Verfahren dient zum Betreiben eines rotierenden Systems, insbesondere einer Vakuumpumpe, mit einem Stator, einem Rotor und einem Permanentmagnetlager zur drehbaren Lagerung des Rotors und umfasst, dass die Resonanzfrequenz des Permanentmagnetlagers verstellt wird. Durch die Verstellung der Resonanzfrequenz kann die Vakuumpumpe so entstimmt werden, dass bei der jeweils aktuellen Rotationsfrequenz des Rotors keine Schwingungsanregung des Stators durch den rotierenden Rotor erfolgt und das Vibrationsniveau des Systems gering gehalten wird.

Erfindungsgemäß wird die Resonanzfrequenz während eines Hochlaufs des rotierenden Systems sprunghaft reduziert, wobei durch die Reduzierung ein Durchgang der Rotationsfrequenz durch die Resonanzfrequenz erfolgt. Dadurch wird eine übermäßige Schwingungsanregung beim Hochlaufen des rotierenden Systems vermieden. Ebenso kann eine übermäßige Schwingungsanregung beim Herunterfahren des rotierenden Systems durch Verstellen der Resonanzfrequenz vermieden werden.

Das Verfahren kann mit einem erfindungsgemäßen rotierenden System gemäß der vorliegenden Beschreibung durchgeführt werden. Die in dieser Beschreibung in Bezug auf das rotierende System sowie dessen Verwendung, Ansteuerung und Betrieb beschriebenen Vorteile und vorteilhaften Ausführungsformen stellen bei entsprechender Anwendung Vorteile und vorteilhafte Ausführungsformen des erfindungsgemäßen Verfahrens dar.

Gemäß einer vorteilhaften Ausführungsform wird zur Verstellung der Resonanzfrequenz die radiale Steifigkeit des Permanentmagnetlagers verstellt. Bevorzugt wird zur Verstellung der Resonanzfrequenz der axiale Versatz zwischen einem rotorseitigen Teil und einem statorseitigen Teil des Permanentmagnetlagers verstellt. Diese Verstellung ist mit einfachen Mitteln realisierbar und führt zu einer besonders wirksamen Verstellung der Resonanzfrequenz.

Bevorzugt wird die Resonanzfrequenz abhängig von der aktuellen Rotationsfrequenz des rotierenden Systems verstellt, insbesondere derart, dass ein Übereinstimmen von Resonanzfrequenz und aktueller Rotationsfrequenz vermieden wird.

Gemäß einer Ausführungsform wird die Resonanzfrequenz abhängig von einem Betriebszustand einer mit dem rotierenden System, insbesondere vakuumtechnisch, verbundenen Anlage verstellt, insbesondere derart, dass die Resonanzfrequenz für eine Messung einer mit dem rotierenden System verbundenen Messeinrichtung der Anlage reduziert wird. Dadurch wird eine Beeinträchtigung der Messgenauigkeit durch Vibrationen des rotierenden Systems vermieden.

Nachfolgend wird die Erfindung beispielhaft anhand einer vorteilhaften Ausführungsform unter Bezugnahme auf die beigefügten Figuren beschrieben. Es zeigen:
- Fig. 1: eine Vakuumpumpe gemäß einer Ausführungsform der Erfindung im Querschnitt, und
- Fig. 2: eine Detailansicht des Permanentmagnetlagers der in Fig. 1 gezeigten Vakuumpumpe.

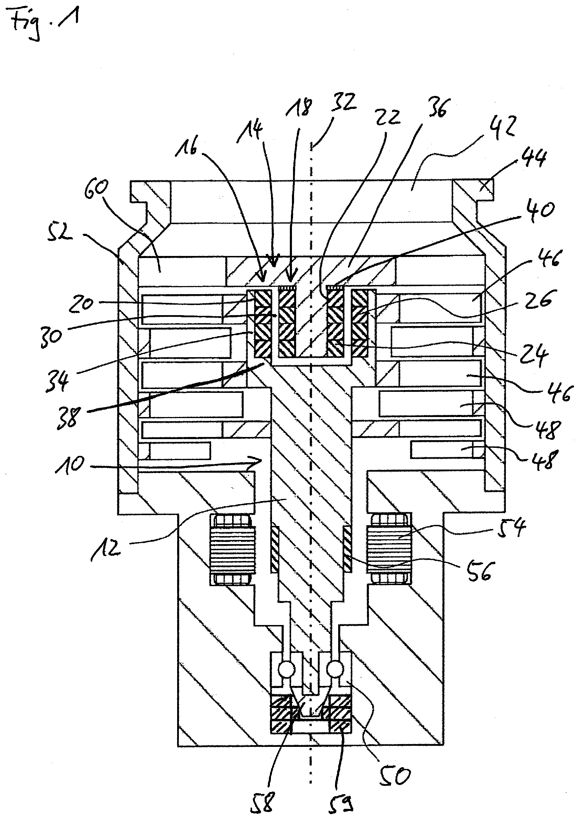

Die in Fig. 1 gezeigte Vakuumpumpe ist als Turbomolekularpumpe ausgebildet und umfasst ein statisches Gehäuse 52 sowie einen Rotor 10 mit einer in dem Gehäuse 52 um eine Rotationsachse 32 drehbar gelagerten Rotorwelle 12.

Die Vakuumpumpe umfasst eine turbomolekulare Pumpstruktur mit mehreren an der Rotorwelle 12 befestigten turbomolekularen Rotorscheiben 46 und mehreren in dem Gehäuse 52 festgelegten turbomolekularen Statorscheiben 48. Der Rotor 10 ist durch einen elektromagnetischen Antrieb drehend antreibbar, der einen Antriebsstator 54 mit einem Statorkern und mehreren um den Statorkern herumgewickelten elektrischen Spulen und eine an der Rotorwelle 12 angeordnete Permanentmagnetanordnung 56 umfasst. Bei der Drehung des Rotors 10 stellt die Pumpstruktur eine Pumpwirkung für ein Prozessgas bereit, das an einem durch einen Einlassflansch 44 des Gehäuses 52 begrenzten Pumpeneinlass 42 ansteht, so dass das Prozessgas von dem Pumpeneinlass 42 zu einem in Fig. 1 nicht dargestellten Pumpenauslass förderbar ist.

Die Vakuumpumpe umfasst ein Wälzlager 50, das den Rotor 10 drehbar lagert und in radialer und axialer Richtung festlegt.

An dem dem Wälzlager 50 zugewandten Ende der Rotorwelle 12 ist eine konische Spritzmutter 58 mit einem zu dem Wälzlager 50 hin zunehmenden Außenquerschnitt vorgesehen. Die Spritzmutter 58 steht mit zumindest einem Abstreifer eines Betriebsmittelspeichers in gleitendem Kontakt, welcher mehrere aufeinandergestapelte saugfähige Scheiben 59 umfasst, die mit einem Betriebsmittel, zum Beispiel einem Schmiermittel, für das Wälzlager 50 getränkt sind. Bei dem Betrieb der Vakuumpumpe wird das Betriebsmittel durch die kapillare Wirkung von dem Betriebsmittelspeicher über den Abstreifer auf die rotierende Spritzmutter 58 übertragen und infolge der Zentrifugalkraft in Richtung des größer werdenden Außendurchmessers der Spritzmutter 58 zu dem Wälzlager 50 hin gefördert, wo es seine, z.B. schmierende, Funktion erfüllt.

Auf der Hochvakuumseite, d.h. im Bereich des Pumpeneinlasses 42, ist die Rotorwelle 12 durch ein Permanentmagnetlager 14 drehbar gelagert. Das Permanentmagnetlager 14 umfasst einen rotorseitigen Lagerteil 16 und einen statorseitigen Lagerteil 18, die jeweils einen Ringstapel 20, 22 aus mehreren in axialer Richtung aufeinandergestapelten permanentmagnetischen Ringen 24, 26 umfassen. Die Magnetringe 24, 26 liegen einander unter Ausbildung eines engen radialen Lagerspalts 30 gegenüber, wobei die rotorseitigen Magnetringe 24 radial außen und die statorseitigen Magnetringe 26 radial innen angeordnet sind. Das in dem Lagerspalt 30 vorhandene magnetische Feld ruft magnetische Abstoßungskräfte zwischen den Magnetringen 24, 26 hervor, die die radiale Lagerung des Rotors 10 bewirken.

Die rotorseitigen Magnetringe 24 sind von einem Trägerabschnitt 34 der Rotorwelle 12 getragen, welcher die Magnetringe 24 radial außenseitig umgibt, und liegen auf einem Schulterabschnitt 38 der Rotorwelle 12 auf, welcher die Magnetringe 24 in axialer Richtung unterstützt. Die statorseitigen Magnetringe 26 sind von einem statorseitigen Trägerabschnitt 36 getragen, welcher sich durch die Magnetringe 26 hindurch erstreckt und an radialen Streben 60 des Gehäuses 52 aufgehängt ist.

Innerhalb des Magnetlagers 14 und insbesondere innerhalb des statorseitigen Ringstapels 22 kann ein in Fig. 1 nicht dargestelltes Fanglager angeordnet sein, welches einen radialen Anschlag für die Rotorwelle 12 bildet und eine Kollision der Magnetringstapel 20, 22 selbst bei Erschütterungen der Vakuumpumpe verhindert, wenn die abstoßende Kraft zwischen den Magnetringen 24, 26 nicht mehr ausreicht, um die Magnetringe 24, 26 auf Abstand zu halten.

Die statorseitigen Magnetringe 26 sind über eine Stellvorrichtung 40 an dem Trägerabschnitt 36 befestigt, welche es ermöglicht, die statorseitigen Magnetringe 26 in axialer Richtung gegenüber dem Trägerabschnitt 36 zu verschieben und dadurch einen axialen Versatz zwischen den rotorseitigen Magnetringen 24 und den statorseitigen Magnetringen 26 einzustellen. Die Stellvorrichtung 40 kann dazu zum Beispiel wenigstens ein piezoelektrisches Element bzw. einen piezoelektrischen Antrieb aufweisen. Allerdings kann auch ein elektrischer, elektromagnetischer, pneumatischer, hydraulischer, mechanischer, fliehkraftgesteuerter oder anderer geeigneter Antrieb zur Einstellung des axialen Versatzes vorgesehen sein.

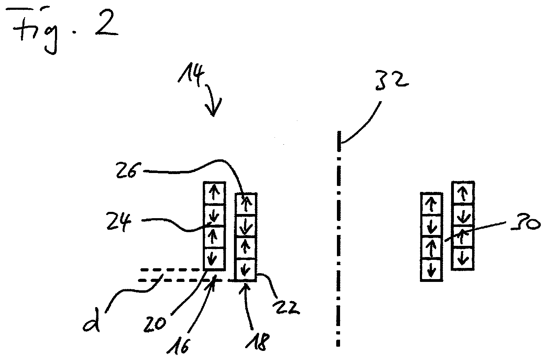

In Fig. 1 sind die statorseitigen Magnetringe 26 in ihrer neutralen Position gezeigt, in der kein axialer Versatz zwischen den Magnetringstapeln 20, 22 vorhanden ist und sich die rotorseitigen Magnetringe 24 und die statorseitigen Magnetringe 26 in radialer Richtung paarweise zumindest annähernd vollständig deckungsgleich gegenüberliegen. Einander in radialer Richtung gegenüberliegende Magnetringe 24, 26 sind im vorliegenden Ausführungsbeispiel jeweils in derselben axialen Richtung polarisiert und stoßen einander ab. In axialer Richtung aufeinanderfolgende Magnetringe bzw. Magnetringpaare 24, 26 weisen eine von Ringpaar zu Ringpaar abwechselnde und zueinander entgegengesetzte axiale Polarisierung auf, wie in Fig. 2 durch Pfeile veranschaulicht ist.

Wenn der statorseitige Magnetringstapel 22 durch die Stellvorrichtung 40 in axialer Richtung aus der in Fig. 1 gezeigten neutralen Position bewegt wird, werden die statorseitigen Magnetringe 26 aus ihrer mit den Magnetringen 24 deckungsgleichen Position herausbewegt.

Die ist in Fig. 2 veranschaulicht. Fig. 2 zeigt den rotorseitigen Magnetringstapel 20 und den statorseitigen Magnetringstapel 22 des Magnetlagers 14 mit einem nicht verschwindenden axialen Versatz d zwischen den Ringstapeln 20, 22. Infolge des Versatzes d liegen die in dieselbe axiale Richtung polarisierten Magnetringe 24, 26 der Ringstapel 20, 22 einander nicht mehr exakt deckungsgleich in radialer Richtung gegenüber. Stattdessen liegen die Magnetringe 26 in ihren axialen Endbereichen entweder einem Magnetring 24 mit einer in der entgegengesetzten axialen Richtung gerichteten Polarisierung gegenüber oder sind ganz aus dem rotorseitigen Magnetringstapel 20 heraus bewegt.

Dadurch werden die magnetischen Abstoßungskräfte zwischen den Ringstapeln 20, 22 reduziert, was eine geringere radiale Steifigkeit des Magnetlagers 14 zur Folge hat, wodurch wiederum die Resonanzfrequenz des Magnetlagers 14 sinkt. Durch eine geeignete Ansteuerung der Stellvorrichtung 40 mit einer in Fig. 1 und 2 nicht dargestellten Steuereinheit lässt sich somit die Resonanzfrequenz des Permanentmagnetlagers 14 verstellen und der Betrieb der Vakuumpumpe so optimieren, dass durch den Rotor 10 im Betrieb der Vakuumpumpe hervorgerufene Vibrationen unterdrückt werden.

### Bezugszeichenliste

- 10: Rotor
- 12: Rotorwelle
- 14: Permanentmagnetlager
- 16, 18: Lagerteil
- 20, 22: Ringstapel
- 24, 26: Ring
- 30: Lagerspalt
- 32: Rotationsachse
- 34, 36: Trägerabschnitt
- 38: Schulterabschnitt
- 40: Stellvorrichtung
- 42: Pumpeneinlass
- 44: Einlassflansch
- 46: Rotorscheibe
- 48: Statorscheibe
- 50: Wälzlager
- 52: Gehäuse
- 54: Antriebsstator
- 56: Permanentmagnetanordnung
- 58: Spritzmutter
- 59: saugfähige Scheibe
- 60: Strebe
- d: Versatz

## Patentansprüche

1. Rotierendes System, insbesondere Vakuumpumpe, mit einem Stator, einem Rotor (10) und einem Permanentmagnetlager (14) zur drehbaren Lagerung des Rotors (10),
wobei eine Stellvorrichtung (40) zur Verstellung der Resonanzfrequenz des Permanentmagnetlagers (14) vorgesehen ist,
wobei eine Steuereinheit zur Ansteuerung der Stellvorrichtung (40) vorgesehen ist,
**dadurch gekennzeichnet, dass**
die Steuereinheit und die Stellvorrichtung (40) dazu eingerichtet sind, die Resonanzfrequenz während eines Hochlaufs des rotierenden Systems sprunghaft zu reduzieren, wobei die Resonanzfrequenz von einem Wert oberhalb der jeweils aktuellen Rotationsfrequenz des rotierenden Systems auf einen Wert unterhalb der jeweils aktuellen Rotationsfrequenz des rotierenden Systems reduziert wird.

2. Rotierendes System nach Anspruch 1,
**dadurch gekennzeichnet, dass**
die Stellvorrichtung (40) dazu ausgebildet ist, zur Verstellung der Resonanzfrequenz die radiale Steifigkeit des Permanentmagnetlagers (14) zu verstellen.

3. Rotierendes System nach Anspruch 1 oder 2,
**dadurch gekennzeichnet, dass**
die Stellvorrichtung (40) dazu ausgebildet ist, zur Verstellung der Resonanzfrequenz die geometrische Form des Permanentmagnetlagers (14) zu verändern.

4. Rotierendes System nach einem der vorstehenden Ansprüche,
**dadurch gekennzeichnet, dass**
die Stellvorrichtung (40) dazu ausgebildet ist, zur Verstellung der Resonanzfrequenz einen axialen Versatz (d) zwischen einem rotorseitigen Teil (16) und einem statorseitigen Teil (18) des Permanentmagnetlagers (14) zu verstellen.

5. Rotierendes System nach einem der vorstehenden Ansprüche,
**dadurch gekennzeichnet, dass**
die Steuereinheit dazu eingerichtet ist, die Verstellung der Resonanzfrequenz durch die Stellvorrichtung (40) so zu steuern, dass der Betrieb des rotierenden Systems optimiert wird und vorzugsweise durch das rotierende System erzeugte Vibrationen reduziert werden.

6. Rotierendes System nach einem der vorstehenden Ansprüche,
**dadurch gekennzeichnet, dass**
die Steuereinheit dazu eingerichtet ist, die Stellvorrichtung (40) so anzusteuern, dass die Resonanzfrequenz abhängig von der aktuellen Rotationsfrequenz des rotierenden Systems verstellt wird, insbesondere derart, dass ein Übereinstimmen der Resonanzfrequenz mit der aktuellen Rotationsfrequenz vermieden wird.

7. Rotierendes System nach einem der vorstehenden Ansprüche,
**dadurch gekennzeichnet, dass**
die Steuereinheit und die Stellvorrichtung (40) dazu eingerichtet sind, nach dem Reduzieren der Resonanzfrequenz die Rotationsfrequenz, insbesondere bei reduzierter Resonanzfrequenz, zu erhöhen.

8. Rotierendes System nach einem der vorstehenden Ansprüche,
**dadurch gekennzeichnet, dass**
die Resonanzfrequenz abhängig von einem Betriebszustand einer mit dem rotierenden System, insbesondere vakuumtechnisch, verbundenen Anlage verstellbar und insbesondere reduzierbar ist, vorzugsweise derart, dass die Resonanzfrequenz für eine Messung einer mit dem rotierenden System verbundenen Messeinrichtung reduzierbar ist.

9. Verfahren zum Betreiben eines rotierenden Systems, insbesondere einer Vakuumpumpe, welches vorzugsweise nach einem der vorstehenden Ansprüche ausgebildet ist, mit einem Stator, einem Rotor (10) und einem Permanentmagnetlager (14) zur drehbaren Lagerung des Rotors (10), wobei die Resonanzfrequenz des Permanentmagnetlagers (14) verstellt wird,
**dadurch gekennzeichnet, dass**
die Resonanzfrequenz während eines Hochlaufs des rotierenden Systems sprunghaft reduziert wird, wobei die Resonanzfrequenz von einem Wert oberhalb der jeweils aktuellen Rotationsfrequenz des rotierenden Systems auf einen Wert unterhalb der jeweils aktuellen Rotationsfrequenz des rotierenden Systems reduziert wird.

10. Verfahren nach Anspruch 9,
**dadurch gekennzeichnet, dass**
zur Verstellung der Resonanzfrequenz die radiale Steifigkeit des Permanentmagnetlagers (14) verstellt wird.

11. Verfahren nach Anspruch 9 oder 10,
**dadurch gekennzeichnet, dass**
zur Verstellung der Resonanzfrequenz der axiale Versatz (d) zwischen einem rotorseitigen Teil (16) und einem statorseitigen Teil (18) des Permanentmagnetlagers (14) verstellt wird.

12. Verfahren nach einem der Ansprüche 9 bis 11,
**dadurch gekennzeichnet, dass**
die Resonanzfrequenz abhängig von der aktuellen Rotationsfrequenz des rotierenden Systems verstellt wird, insbesondere derart, dass ein Übereinstimmen von Resonanzfrequenz und aktueller Rotationsfrequenz vermieden wird.

13. Verfahren nach einem der Ansprüche 9 bis 12,
**dadurch gekennzeichnet, dass**
die Resonanzfrequenz abhängig von einem Betriebszustand einer mit dem rotierenden System, insbesondere vakuumtechnisch, verbundenen Anlage verstellt wird, insbesondere derart, dass die Resonanzfrequenz für eine Messung einer mit dem rotierenden System verbundenen Messeinrichtung reduziert wird.

## Claims

1. A rotating system, in particular a vacuum pump, comprising a stator; a rotor (10); and a permanent magnet bearing (14) for the rotatable support of the rotor (10),
wherein an adjustment apparatus (40) for adjusting the resonant frequency of the permanent magnet bearing (14) is provided; and
wherein a control unit for controlling the adjustment apparatus (40) is provided,
**characterized in that**
the control unit and the adjustment apparatus (40) are adapted to abruptly reduce the resonant frequency during a starting up of the rotating system, with the resonant frequency being reduced from a value above the respective current rotational frequency of the rotating system to a value below the respective current rotational frequency of the rotating system.

2. A rotating system in accordance with claim 1,
**characterized in that**
the adjustment apparatus (40) is configured to adjust the radial stiffness of the permanent magnet bearing (14) in order to adjust the resonant frequency.

3. A rotating system in accordance with claim 1 or claim 2,
**characterized in that**
the adjustment apparatus (40) is configured to change the geometrical shape of the permanent magnet bearing (14) in order to adjust the resonant frequency.

4. A rotating system in accordance with any one of the preceding claims,
**characterized in that**
the adjustment apparatus (40) is configured to adjust an axial offset (d) between a rotor-side part (16) and a stator-side part (18) of the permanent magnet bearing (14) in order to adjust the resonant frequency.

5. A rotating system in accordance with any one of the preceding claims,
**characterized in that**
the control unit is adapted to control the adjustment of the resonant frequency by the adjustment apparatus (40) such that the operation of the rotating system is optimized and vibrations generated by the rotating system are preferably reduced.

6. A rotating system in accordance with any one of the preceding claims,
**characterized in that**
the control unit is adapted to control the adjustment apparatus (40) such that the resonant frequency is adjusted in dependence on the current rotational frequency of the rotating system, in particular such that it is avoided that the resonant frequency equals the current rotational frequency.

7. A rotating system in accordance with any one of the preceding claims,
**characterized in that**
the control unit and the adjustment apparatus (40) are adapted to increase the rotational frequency after the reduction of the resonant frequency and in particular to increase it at reduced resonant frequency.

8. A rotating system in accordance with any one of the preceding claims,
**characterized in that**
the resonant frequency can be adjusted and can in particular be reduced in dependence on an operating state of a plant connected, in particular in a technical vacuum manner, to the rotating system, preferably such that the resonant frequency can be reduced for a measurement of a measurement device connected to the rotating system.

9. A method of operating a rotating system, in particular a vacuum pump, which is preferably configured in accordance with any one of the preceding claims, comprising a stator; a rotor (10); and a permanent magnet bearing (14) for the rotatable support of the rotor (10),
wherein the resonant frequency of the permanent magnet bearing (14) is adjusted,
**characterized in that**
the resonant frequency is abruptly reduced during a starting up of the rotating system, with the resonant frequency being reduced from a value above the respective current rotational frequency of the rotating system to a value below the respective current rotational frequency of the rotating system.

10. A method in accordance with claim 9,
**characterized in that**
the radial stiffness of the permanent magnet bearing (14) is adjusted in order to adjust the resonant frequency.

11. A method in accordance with claim 9 or claim 10,
**characterized in that**
the axial offset (d) between a rotor-side part (16) and a stator-side part (18) of the permanent magnet bearing (14) is adjusted in order to adjust the resonant frequency.

12. A method in accordance with any one of the claims 9 to 11,
**characterized in that**
the resonant frequency is adjusted in dependence on the current rotational frequency of the rotating system, in particular such that it is avoided that the resonant frequency equals current rotational frequency.

13. A method in accordance with any one of the claims 9 to 12,
**characterized in that**
the resonant frequency is adjusted in dependence on an operating state of a plant connected, in particular in a technical vacuum manner, to the rotating system, in particular such that the resonant frequency is reduced for a measurement of a measurement device connected to the rotating system.

## Revendications

1. Système en rotation, en particulier pompe à vide, comportant un stator, un rotor (10) et un palier à aimant permanent (14) pour le montage rotatif du rotor (10),
dans lequel
il est prévu un dispositif de réglage (40) pour régler la fréquence de résonance du palier à aimant permanent (14),
il est prévu une unité de commande pour piloter le dispositif de réglage (40),
**caractérisé en ce que**
l'unité de commande et le dispositif de réglage (40) sont conçus pour réduire brusquement la fréquence de résonance pendant un démarrage du système en rotation, la fréquence de résonance étant réduite pour passer d'une valeur supérieure à la fréquence de rotation actuelle respective du système en rotation à une valeur inférieure à la fréquence de rotation actuelle respective du système en rotation.

2. Système en rotation selon la revendication 1,
**caractérisé en ce que**
le dispositif de réglage (40) est réalisé pour régler la rigidité radiale du palier à aimant permanent (14), en vue de régler la fréquence de résonance.

3. Système en rotation selon la revendication 1 ou 2,
**caractérisé en ce que**
le dispositif de réglage (40) est réalisé pour modifier la forme géométrique du palier à aimant permanent (14), en vue de régler la fréquence de résonance.

4. Système en rotation selon l'une des revendications précédentes,
**caractérisé en ce que**
le dispositif de réglage (40) est réalisé pour régler un décalage axial (d) entre une partie côté rotor (16) et une partie côté stator (18) du palier à aimant permanent (14), en vue de régler la fréquence de résonance.

5. Système en rotation selon l'une des revendications précédentes,
**caractérisé en ce que**
l'unité de commande est conçue pour commander le réglage de la fréquence de résonance par le dispositif de réglage (40) de telle sorte que le fonctionnement du système en rotation est optimisé et que de préférence des vibrations générées par le système en rotation sont réduites.

6. Système en rotation selon l'une des revendications précédentes,
**caractérisé en ce que**
l'unité de commande est conçue pour piloter le dispositif de réglage (40) de telle sorte que la fréquence de résonance est réglée en fonction de la fréquence de rotation actuelle du système en rotation, en particulier de manière à éviter une coïncidence de la fréquence de résonance avec la fréquence de rotation actuelle.

7. Système en rotation selon l'une des revendications précédentes,
**caractérisé en ce que**
l'unité de commande et le dispositif de réglage (40) sont conçus pour augmenter la fréquence de rotation, en particulier à fréquence de résonance réduite, après la réduction de la fréquence de résonance.

8. Système en rotation selon l'une des revendications précédentes,
**caractérisé en ce que**
la fréquence de résonance est réglable et peut en particulier être réduite en fonction d'un état de fonctionnement d'une installation reliée au système en rotation, en particulier par liaison sous vide, de préférence de telle sorte que la fréquence de résonance peut être réduite pour une mesure d'un dispositif de mesure relié au système en rotation.

9. Procédé de fonctionnement d'un système en rotation, en particulier d'une pompe à vide, qui est de préférence réalisé(e) selon l'une des revendications précédentes, comportant un stator, un rotor (10) et un palier à aimant permanent (14) pour le montage rotatif du rotor (10),
dans lequel la fréquence de résonance du palier à aimant permanent (14) est réglée,
**caractérisé en ce que**
la fréquence de résonance est brusquement réduite pendant un démarrage du système en rotation, la fréquence de résonance étant réduite pour passer d'une valeur supérieure à la fréquence de rotation actuelle respective du système en rotation à une valeur inférieure à la fréquence de rotation actuelle respective du système en rotation.

10. Procédé selon la revendication 9,
**caractérisé en ce que**
la rigidité radiale du palier à aimant permanent (14) est réglée, en vue de régler la fréquence de résonance.

11. Procédé selon la revendication 9 ou 10,
**caractérisé en ce que**
le décalage axial (d) entre une partie côté rotor (16) et une partie côté stator (18) du palier à aimant permanent (14) est réglé, en vue de régler la fréquence de résonance.

12. Procédé selon l'une des revendications 9 à 11,
**caractérisé en ce que**
la fréquence de résonance est réglée en fonction de la fréquence de rotation actuelle du système en rotation, en particulier de manière à éviter une coïncidence de la fréquence de résonance avec la fréquence de rotation actuelle.

13. Procédé selon l'une des revendications 9 à 12,
**caractérisé en ce que**
la fréquence de résonance est réglée en fonction d'un état de fonctionnement d'une installation reliée au système en rotation, en particulier par liaison sous vide, de préférence de telle sorte que la fréquence de résonance est réduite pour une mesure d'un dispositif de mesure relié au système en rotation.
